# EUROPÄISCHE PATENTANMELDUNG

(11) **EP 0 648 793 A1**
(43) Veröffentlichungstag der Anmeldung: **19.04.1995**
(21) Anmeldenummer: 94116055.8
(22) Anmeldetag: 12.10.1994
(51) Int. Cl.: C08G 18/38, G02F 1/35, C09B 69/10

(54) **Azofarbstoffgruppierungen und Urethangruppen enthaltendes Polyaddukt und dessen Verwendung in der nicht-linearen Optik**

(30) Priorität: 19.10.1993 DE 4335540
(71) Anmelder: BASF Aktiengesellschaft, D-67063 Ludwigshafen (DE)
(72) Erfinder: Beckmann, Stefan, Dr., D-67098 Bad Dürkheim (DE); Etzbach, Karl-Heinz, Dr., D-67227 Frankenthal (DE); Sens, Rüdiger, Dr., D-68165 Mannheim (DE); Häberle, Karl, Dr., D-67346 Speyer (DE)

(57) **Zusammenfassung**

Azofarbstoff- und urethangruppenhaltige Polyaddukte aus
(a) mindestens einem organischen Polyisocyanat,
(b) mindestens einem Diol eines heterocyclischen Azofarbstoffs,
sowie gegebenenfalls
(c) einer oder mehreren Verbindungen mit mindestens zwei gegenüber NCO reaktiven Gruppen, die ein mittleres Molekulargewicht $\overline{\text{M}}$ₙ bis zu 500 g/Mol aufweisen, und/oder
(d) einer oder mehreren Polyhydroxyverbindungen mit mittleren Molekulargewichten $\overline{\text{M}}$ₙ von über 500 bis zu 5000 g/mol.

Diese Polyaddukte eignen sich für Anwendungen in der nichtlinearen Optik.

## Beschreibung

Die Erfindung betrifft Azofarbstoffgruppierungen und Urethangruppen enthaltende Polyaddukte und deren Verwendung in der nicht-linearen Optik.

Polyurethane mit Nitroazofarbstoffen sind bekannt aus der EP-A 0 359 648 bzw. FR-A 2 650 283. Die hierin beschriebenen Produkte sind jedoch hinsichtlich ihrer NLO-Eigenschaften verbesserungsbedürftig.

Aufgabe der vorliegenden Erfindung ist es, Produkte mit verbesserten Verarbeitungseigenschaften aufzuzeigen, die gute Filmbildungseigenschaften und darüber hinaus besonders vorteilhafte NLO-Eigenschaften aufweisen.

Überraschenderweise gelingt dies durch den Einsatz von heterocyclischen Chromophoren mit hohem β-Wert.

Gegenstand der vorliegenden Erfindung sind Azofarbstoffgruppierungen und Urethangruppen enthaltende Polyaddukte aus
(a) mindestens einem organischen Polyisocyanat,
(b) mindestens einem Diol eines heterocyclischen Farbstoffs,
sowie gegebenenfalls
(c) einer oder mehreren Verbindungen mit mindestens zwei gegenüber NCO reaktiven Gruppen, die ein mittleres Molekulargewicht $\overline{\text{M}}$ₙ bis zu 500 g/Mol aufweisen, und/oder
(d) einer oder mehreren Polyhydroxyverbindungen mit mittleren Molekulargewichten $\overline{\text{M}}$ₙ von über 500 bis zu 5000 g/mol,
mit der Maßgabe, daß auf ein Grammäquivalent NCO der Komponente (a) 0,1 bis 2 Grammäquivalente Hydroxylgruppen der Komponente (b), 0 bis 0,9 Grammäquivalente NCO-reaktiver Gruppen der Komponente (c), und 0 bis 0,5 Grammäquivalente Hydroxylgruppen der Komponente (d), wobei das Verhältnis der NCO-Gruppen in Komponente (a) zur Summe der NCO-reaktiven Gruppen in den Komponenten (b), (c) und (d) 2:1 bis 1:2 beträgt, eingesetzt werden und die Komponente (b) die allgemeine Formel (I) 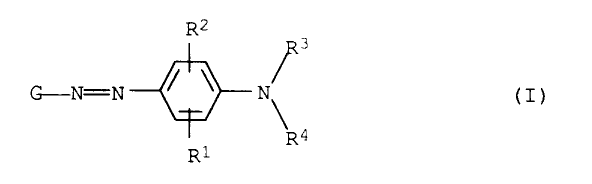
aufweist, worin
- G: für einen heterocyclischen Ring,
- R¹ und R²: untereinander gleich oder verschieden sind und für Wasserstoff, Alkyl mit 1 bis 6 Kohlenstoffatomen, Cycloalkyl mit 3 bis 7 Kohlenstoffatomen, Alkoxy mit 1 bis 6 Kohlenstoffatomen, durch Phenyl oder C₁- bis C₄-Alkoxy substituiertes Alkyl, CN, NO₂, SO₃H, CHO oder eine vernetzungsfähige Gruppierung stehen,
- R³ und R⁴: untereinander gleich oder verschieden sind und für aliphatische Kohlenwasserstoffreste mit 1 bis 12 Kohlenstoffatomen, cycloaliphatische Kohlenwasserstoffreste mit 5 bis 15 Kohlenstoffatomen, aromatische Kohlenwasserstoffreste mit 6 bis 15 Kohlenstoffatomen oder araliphatische Kohlenwasserstoffreste mit 7 bis 15 Kohlenstoffatomen stehen, oder R³ und R⁴ miteinander einen stickstoffhaltigen Ring bilden, mit der Maßgabe, daß entweder R³ und R⁴ jeweils eine Hydroxylgruppe tragen oder R³ zwei Hydroxylgruppen, R⁴ jedoch keine Hydroxylgruppe trägt, oder für den Fall, daß R³ und R⁴ miteinander einen stickstoffhaltigen Ring bilden, dieser Ring zwei direkt oder über C₁-C₆-Alkylengruppen gebundene Hydroxylgruppen trägt.

Bevorzugte heterocyclische Ringe G im erfindungsgemäßen Polyaddukt sind Reste der allgemeinen Formel 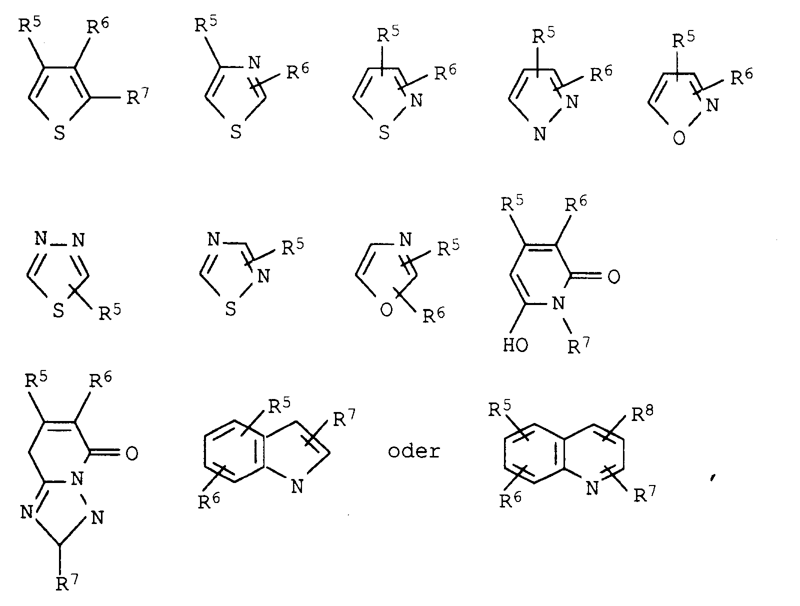
worin
- R⁵ bis R⁸: untereinander gleich oder verschieden sind und für Alkyl mit 1 bis 10 Kohlenstoffatomen,
Cycloalkyl mit 3 bis 8 Kohlenstoffatomen,
Alkoxy mit 1 bis 8 Kohlenstoffatomen,
Halogen, CN, NO₂, CONH₂, CONR$\frac{\text{9}}{\text{2}}$, COOR⁹, (CH₂)_{z}-COOR⁹ mit z = 1 bis 10, NH-CO-R⁹,
R⁹ = Alkyl mit 1 bis 10 Kohlenstoffatomen, Phenyl, Benzyl, Ethylphenyl oder Alkenyl mit 2 bis 10 Kohlenstoffatomen stehen oder jeweils zwei der Reste R⁵ bis R⁸ miteinander anellierte Ringe bilden, oder R⁵ bis R⁹ für vernetzungsfähige Gruppierungen stehen.

Eine bevorzugte Ausführungsform der vorliegenden Erfindung besteht auch darin, daß in der allgemeinen Formel (I) R³ und R⁴ für -CH₂-CH₂₋H stehen und die vernetzungsfähige Gruppierung ein Cinnamoyl-, Oxiran-, CH₂=CH-CO-, CH₂=C(CH₃)-CO-, CH₂=CH-, CH₂=CH-O-CO- oder CH₂=CH-O-Rest ist.

Gegenstand der vorliegenden Erfindung ist auch die Verwendung der erfindungsgemäßen Polyaddukte in der nicht-linearen Optik, insbesondere in Bauelementen der Nachrichtentechnik.

Mit den erfindungsgemäßen Azofarbstoffgruppierungen und Urethangruppen enthaltenden Polyaddukten gelingt es, wesentliche Verbesserungen in den Verarbeitungseigenschaften zu erzielen.

Zum einen zeigen die erfindungsgemäßen Polyaddukte gute nicht-linear optische Werte, zum anderen ist eine gute Schichtbildung mit geringeren optischen Verlusten bei der Lichtführung möglich.

Insbesondere ist hierbei die Eignung der erfindungsgemäßen Polyaddukte in der Nachrichtentechnik, in optischen Modulatoren (z.B. Mach-Zehnder-Interferometer), in optischen Schaltern, bei der Frequenzmischung oder in Wellenleitern hervorzuheben.

Zu den Aufbaukomponenten der erfindungsgemäßen Polyaddukte und bezüglich ihrer Verwendung ist im einzelnen folgendes auszuführen.

Sowohl die Herstellung der erfindungsgemäßen Polyaddukte als auch die der ihnen zugrundeliegenden Chromophore kann nach üblichen und bekannten Methoden der organischen Chemie erfolgen, wie sie beispielsweise in March, "Advanced Organic Chemistry", bzw. in Organicum, 16. Auflage bzw. im "Kunststoff-Handbuch", 2. Auflage 1983, Carl-Hanser Verlag, München, Wien, Band 7, "Polyurethane", beschrieben sind.

Die Herstellung der als Ausgangsmaterialien für die Polyaddukte einzusetzenden monomeren Azofarbstoffe mit heterocyclischen Komponenten kann beispielsweise durch Umsetzung entsprechend substituierter Aminogruppen tragender Heterocyclen in stark saurem Medium mit Nitrosylschwefelsäure erfolgen. Die so erhaltenen Diazoniumsalzlösungen lassen sich dann beispielsweise mit N,N-Bis(hydroxyalkyl)anilin in stark saurem Medium (conc. Schwefelsäure + Amidoschwefelsäure) umsetzen (möglichst bei Temperaturen von < 5°C), durch Zugabe von Alkalilauge isolieren und auf übliche Weise (beispielsweise durch Umkristallisieren) reinigen. Die so erhältlichen Bishydroxyverbindungen lassen sich dann beispielsweise durch Umsetzung mit Polyisocyanaten, gegebenenfalls zusammen mit Komponenten (c) oder (d), im Verhältnis 2:1 bis 1:2 in die erfindungsgemäßen Polyaddukte überführen und auf übliche Weise (beispielsweise durch Umfällen) reinigen.

Durch die Wahl des Verhältnisses von NCO-Gruppen zu NCO-reaktiven Gruppen läßt sich das Molekulargewicht in der dem Fachmann bekannten Weise einstellen.

Die erfindungsgemäßen Polyaddukte weisen im allgemeinen mittlere Molekulargewichte $\overline{\text{M}}$ₙ zwischen 500 und 500 000 auf.

Geeignete Polyisocyanate (a) zum Aufbau der erfindungsgemäßen Polyaddukte sind z.B. Diisocyanate der allgemeinen Formel X(NCO)₂, wobei X einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger Diisocyanate sind Tetramethylendiisocyanat, Hexamethylendiisocyanat, Dodecamethylendiisocyanat, 1,4-Diisocyanato-cyclohexan, 1-Isocyanato-3,5,5-trimethyl-5-isocyanatomethylcyclohexan (IPDI), 4,4'-Diisocyanato-dicyclohexylmethan (HMDI), 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, m- und p-Tetramethylxylylendiisocyanat sowie aus diesen Verbindungen bestehende Gemische.

Es ist auch möglich, die in der Polyurethanchemie an sich bekannten höherfunktionellen Polyisocyanate oder auch an sich bekannte modifizierte, beispielsweise Carbodiimid-, Allophanat-, Isocyanurat-, Urethan- und/oder Biuretgruppen aufweisende Polyisocyanate anteilig mitzuverwenden.

Bei Komponente (b) handelt es sich um Diole der allgemeinen Formel (I) 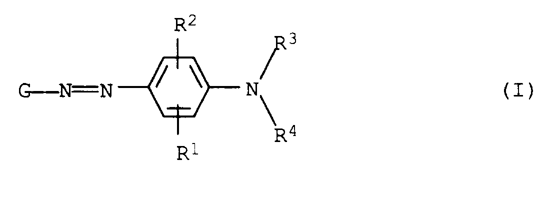
worin
- R¹ und R²: untereinander gleich oder verschieden sind und für Wasserstoff, Alkyl mit 1 bis 6 Kohlenstoffatomen, z.B. Methyl, Ethyl, n-Propyl, Isopropyl, n-Butyl, Isobutyl, Pentyl, Hexyl, Alkoxy mit 1 bis 6 Kohlenstoffatomen, z.B. Methoxy, Ethoxy, Propoxy, Butoxy, durch Phenyl oder C₁- bis C₄-Alkoxy substituiertes Alkyl, z.B. Methylmethoxy, CN, NO₂, SO₃H, CHO oder eine vernetzungsfähige Gruppierung, wie ein Zimtsäure-, Oxiran-, Acrylat-, Methacrylat-, Vinyl-, Vinylester-, Vinyletherrest oder CN, NO₂, SO₃H oder CHO stehen;
- R³ und R⁴: untereinander gleich oder verschieden sind und für aliphatische Kohlenwasserstoffreste mit 1 bis 12 Kohlenstoffatomen, beispielsweise Methyl, Ethyl, Propyl, Isopropyl, n-Butyl, Isobutyl, Pentyl, Hexyl, Octyl, Nonyl, Decyl, Undecyl, Dodecyl, cycloaliphatische Kohlenwasserstoffreste mit 5 bis 15 Kohlenstoffatomen, beispielsweise Cyclopentyl, Cyclohexyl, Cycloheptyl, aromatische Kohlenwasserstoffreste mit 6 bis 15 Kohlenstoffatomen, beispielsweise Phenyl, Tolyl, Xylyl oder araliphatische Kohlenwasserstoffreste mit 7 bis 15 Kohlenstoffatomen, beispielsweise Benzyl oder Ethylphenyl stehen, oder R³ und R⁴ miteinander einen stickstoffhaltigen Ring bilden, mit der Maßgabe, daß entweder R³ und R⁴ jeweils eine Hydroxylgruppe tragen oder R³ zwei Hydroxylgruppen, R⁴ jedoch keine Hydroxylgruppe trägt, oder für den Fall, daß R³ und R⁴ einen stickstoffhaltigen Ring bilden, dieser Ring zwei direkt oder über C₁-C₆-Alkylengruppen, wie z.B. über Ethylengruppen gebundene Hydroxylgruppen trägt;
- G: für einen heterocyclischen Ring als Elektronenakzeptor, insbesondere für einen Rest der allgemeinen Formel 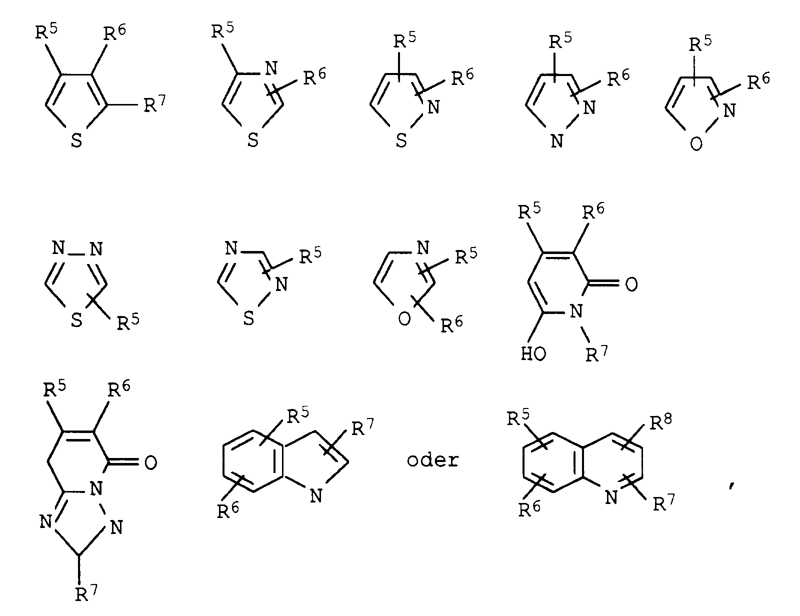
steht, worin
- R⁵ bis R⁸: untereinander gleich oder verschieden sind und für Alkyl mit 1 bis 10 Kohlenstoffatomen, beispielsweise Methyl, Ethyl, n-Propyl, Isopropyl, n-Butyl, Isobutyl, Hexyl, Heptyl, Octyl, Decyl, Cycloalkyl mit 3 bis 8 Kohlenstoffatomen, z.B. Cyclopentyl, Cyclohexyl, Cycloheptyl, Alkoxy mit 1 bis 8 Kohlenstoffatomen, beispielsweise Methoxy, Ethoxy, Propoxy, Butoxy, Halogen, wie z.B. Fluor, Chlor, Brom oder Jod, CN, NO₂, COOR⁹, (CH₂)_{z}-COOR⁹ mit z = 1 bis 10und R⁹ = Alkyl mit 1 bis 10 Kohlenstoffatomen, Phenyl, Benzyl, Ethylphenyl oder Alkenyl mit 2 bis 10 Kohlenstoffatomen, wie z.B. Vinyl, Allyl, stehen oder jeweils zwei der Reste R⁵ bis R⁸ miteinander anellierte Ringe wie z.B. Naphthyl bilden;

Beispiele für bevorzugte Chromophore (b) mit heterocyclischen Ringen sind: 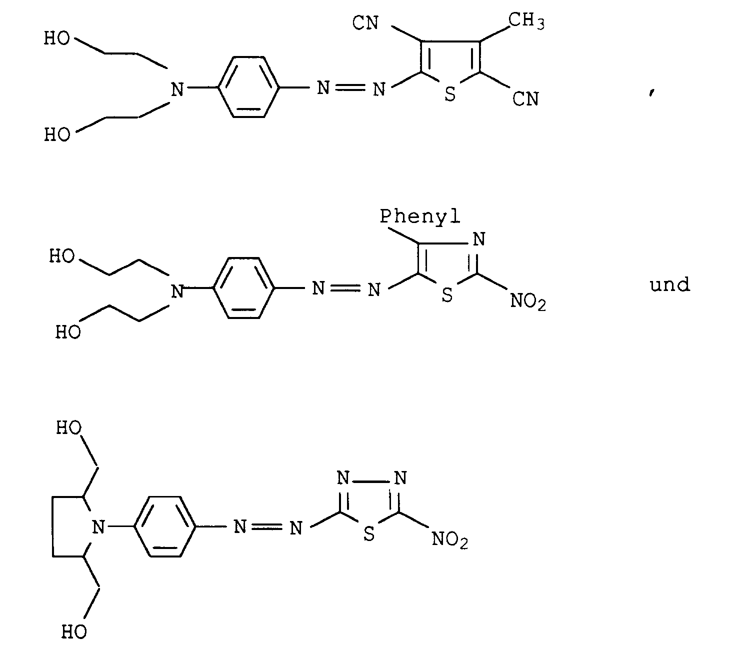
Als Verbindungen (c) mit mindestens zwei gegenüber Isocyanat reaktiven Gruppen und einem Molgewicht bis zu 500 g/mol eignen sich z.B. die entsprechenden, unter (d) aufgeführten, zur Herstellung der Polyetherdiole geeigneten Diole und Triole, sowie höher als trifunktionelle Alkohole wie Pentaerythrit oder Sorbit, Aminoalkohole wie Ethanolamin, Isopropanolamin, Methylethanolamin, Diaminopropane, Diaminobutane, Diaminohexane, Piperazin, 2,5-Dimethylpiperazin, 1-Amino-3-Aminomethyl-3,5,5-trimethylcyclohexan (Isophorondiamin, IPDA), 4,4'-Diaminodicyclohexylmethan, 1,4-Diaminocyclohexan, Hydrazin oder Hydrazinhydrat. Auch Wasser ist geeignet.

Bevorzugt werden als Komponente (c) lineare α,ω-Dihydroxyalkane wie Äthandiol-(1,2), Butandiol-(1,4), Pentandiol-(1,5), Hexandiol-(1,6) oder ethergruppenhaltige Alkohole verwendet.

Es werden 0 bis 0,9 Grammäquivalente NCO-reaktiver Gruppen aus Verbindungen (c) mit mindestens zwei gegenüber Isocyanat reaktiven Gruppen verwendet, bevorzugt 0 bis 0,8 Grammäquivalent.

Bei Komponente (d) handelt es sich um Polyhydroxyverbindungen des Molgewichtsbereiches zwischen 500 und 5000 g/mol, bevorzugt 600 bis 4000 g/mol. Als solche eignen sich insbesondere die an sich bekannten Polyester- und Polyetherole.

Geeignete Polyesterole sind Umsetzungsprodukte von mehrwertigen, vorzugsweise zweiwertigen, und gegebenenfalls zusätzlich dreiwertigen, Alkoholen mit mehrwertigen, vorzugsweise zweiwertigen aromatischen Carbonsäuren. Anstelle der freien Carbonsäuren können auch die entsprechenden Carbonsäureanhydride oder entsprechende Carbonsäureester von niederen Alkoholen oder deren Gemische zur Herstellung der Polyesterdiole verwendet werden. Als Beispiele für mehrwertige Carbonsäuren seien genannt:
Bernsteinsäure, Glutarsäure, Adipinsäure, Korksäure, Azelainsäure, Sebacinsäure, Tetrahydrophthalsäure, Hexahydrophthalsäure, Endomethylentetrahydrophthalsäure, Maleinsäure, Fumarsäure, dimere Fettsäuren, Phthalsäure, Isophthalsäure, Terephthalsäure, die isomeren Benzoltri- und -tetracarbonsäuren, Tetrachlorphthalsäure, die isomeren Pyridindicarbonsäuren und - soweit existent - deren Anhydride.

Als mehrwertige Alkohole kommen z.B. Ethandiol, Propandiol-(1,2) und -(1,3), Butandiol-(1,4), -(1,3) und -(2,3), Butendiol-(1,4), Butindiol-(1,4), die isomeren Pentan-, Hexan- und Octandiole, Neopentylglykol, 1,4-Bis-Hydroxymethylcyclohexan, 2-Methyl-1,3-propandiol, Hydrochinon-bis-(hydroxyethylether), alkoxyliertes Bisphenol A, ferner Di-, Tri-, Tetra- und Polyethylenglykol, Di- und Polypropylenglykol, Dibutylenglykol und Polybutylenglykole in Frage. In geringen, d.h. 10 mol-% nicht übersteigenden Anteilen, können auch höher als difunktionelle Alkohole, wie z.B. Glycerin, Trimethylolpropan, Trimethylolethan oder Hexantriol-(1,2,6), mitverwendet werden.

Auch Polyetherole auf Basis von Epoxiden von Ethen, Propen, Buten oder Styrol sowie Polytetrahydrofuran können verwendet werden.

Es können 0 bis 0,5, bevorzugt 0 bis 0,2 Grammäquivalente OH aus Polyhydroxylverbindungen (d) verwendet werden, besonders bevorzugt werden kein Polyhydroxylverbindungen (d) mit einem Molgewicht über 500 bis zu 5000 g/mol mitverwendet.

Weitere Beispiele von bei der Herstellung der erfindungsgemäßen Polyurethane als Komponenten (a), (b) und (d) einsetzbaren Verbindungen sind z.B. in High Polymers, Vol. XVI, "Polyurethanes, Chemistry and Technology", von Saunders-Frisch, Interscience Publishers, New York, London, Band I, 1962, beschrieben.

Das Verhältnis der NCO-Gruppen in Komponente (a) zur Summe der NCO-reaktiven Gruppen in den Komponenten (b), (c) und (d) soll 2:1 bis 1:2, vorzugsweise 1,5:1 bis 1:1,5, insbesondere 1:1 betragen. Gegebenenfalls im Polyaddukt noch vorhandene freie NCO-Gruppen können, falls gewünscht, mit einfachen Alkoholen, wie z.B. Methanol, Ethanol; Amin, Ammoniak oder Wasser umgesetzt werden.

Die Herstellung der erfindungsgemäßen urethangruppenhaltigen Polyaddukte kann nach den üblichen Methoden erfolgen.

Bevorzugt wird die Herstellung in gegenüber Isocyanat inerten Lösungsmitteln wie Kohlenwasserstoffen, Ketonen, Ethern, Estern oder Amiden durchgeführt, wobei die Reaktionstemperatur bei 50 bis 200°C, vorzugsweise bei 60 bis 150°C liegen kann.

Zur Beschleunigung der Reaktion können die üblichen Katalysatoren, wie Dibutylzinndilaurat, Zinn-II-octoat oder Diazobicyclo-(2,2,2)-octan, mitverwendet sein.

Die Herstellung von Schichten, die die erfindungsgemäßen Polyaddukte enthalten, erfolgt in an sich bekannter Weise, z.B. durch Naßbeschichtung (Spin coating) mit einer 5 - 15 %igen Lösung des Polyaddukts in einem Lösungsmittel (z.B. Tetrachlorethan, Methylenchlorid, Tetrahydrofuran).

Geeignete Substrate sind dabei z.B. Indium-Zinn-Oxid (= ITO) u.a. Bei geeignetem Substitutionsmuster (z.B. Epoxystruktur) können die Polyaddukte auch photochemisch, thermisch oder durch die Einwirkung von Elektronenstrahlen vernetzt werden.

Die neuen Polyaddukte zeichnen sich durch gute Verarbeitbarkeit zu dünnen Schichten, hohe Reinheit, enge Molekulargewichtsverteilung, gute Orientierung im elektrischen Feld, gute Langzeitstabilität und gute elektrooptische Koeffizienten aus.

Die in den Beispielen genannten Teile und Prozente sind, soweit nicht anders angegeben, Gewichtsteile bzw. Gewichtsprozente.

### I. Herstellung von Komponente (b) (Azofarbstoffe mit heterocyclischen Komponenten)

### Beispiel 1

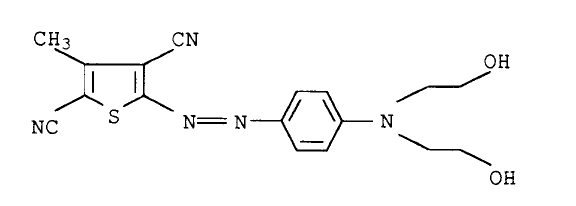

1,63 g (0,01 mol) 2-Amino-3,5-dicyan-4-methylthiophen wurden in 50 g Eisessig/Propionsäure (17:3 v/v) aufgerührt. Anschließend wurden 7 g 85 gew.-%ige Schwefelsäure bei Raumtemperatur und 3 g Nitrosylschwefelsäure bei 0 bis + 5°C zugetropft.

Nach dreistündigem Rühren bei 0 bis 5°C wurde die entstandene Diazoniumsalzlösung zu 2,09 g (0,01 mol) N,N-Bis(Hydroxyethyl)anilin in 150 g Eiswasser und 10 g konz. Schwefelsäure und 0,5 g Amidoschwefelsäure bei einer Temperatur < 0,5°C und einem pH-Wert von 1 bis 1,5 zugetropft. Der pH-Wert wurde durch Zugabe von 20 gew.-%iger Natronlauge bei 1 bis 1,5 gehalten. Nach Rühren über Nacht bei Raumtemperatur wurde der ausgefallene Farbstoff abgesaugt, mit Wasser gewaschen und getrocknet. Eine Umkristallisation erfolgte aus Chlorbenzol.

Ausbeute: 2,2 g

| C₁₇H₁₇N₄O₂S (341) | | | | | |
|---|---|---|---|---|---|
| ber.: | C 59.82 | H 5.00 | N 16.42 | O 9.38 | S 9.38 |
| gef.: | C 60.10 | H 4.95 | N 16.30 | O 8.99 | S 9.66 |

Analog Beispiel 1 können die in der folgenden Tabelle aufgeführten Produkte erhalten werden.

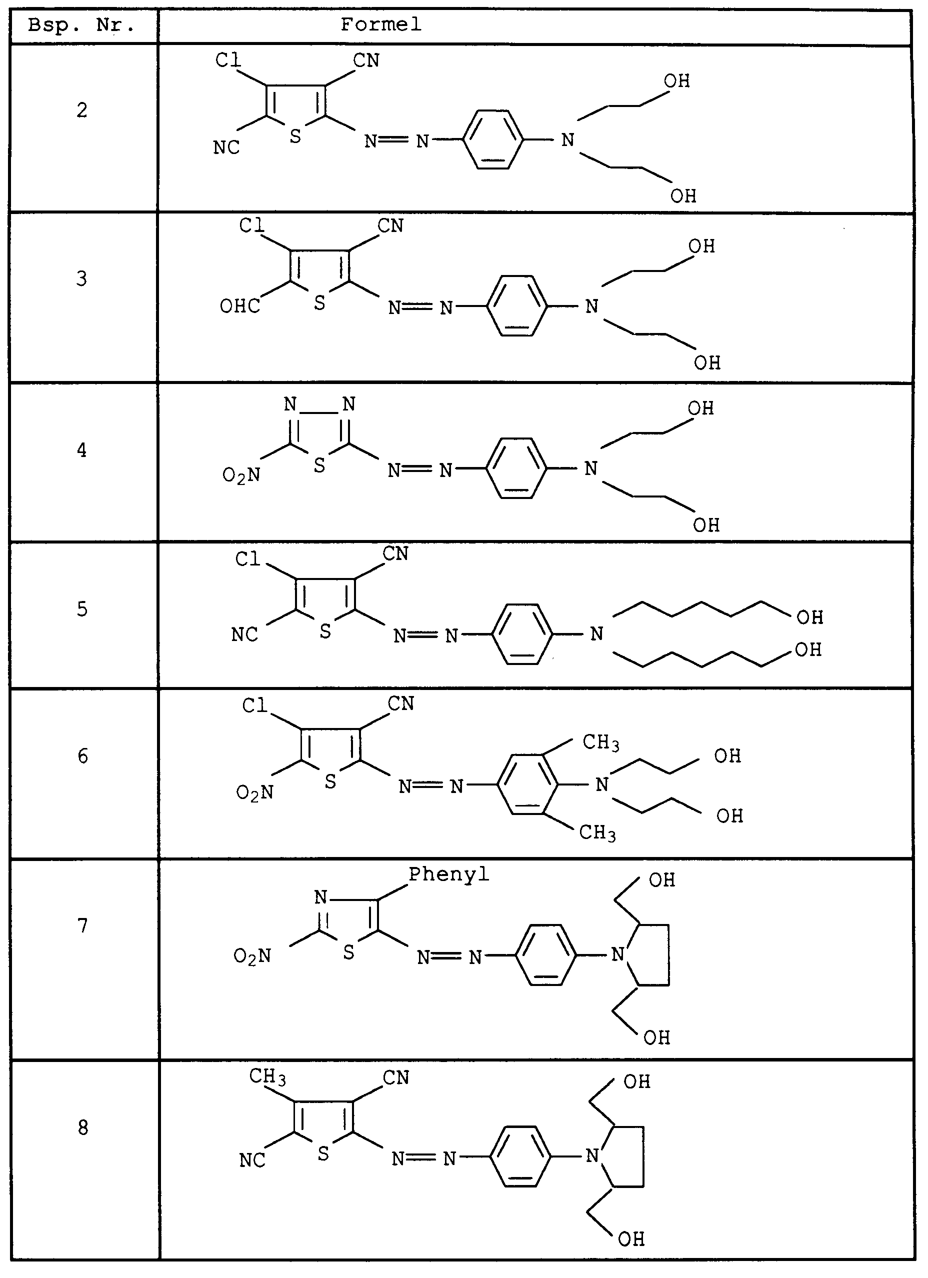

### II. Herstellung der Polyaddukte

### Beispiel 9

In einem Einhalskolben wurden 2,22 g (10 mmol) Isophorondiisocyanat (IPDI), 200 g Toluol und 0,1 g Dibutylzinndilaurat vorgelegt. Ein Soxleth-Extraktor wurde mit 3,55 g (10 mmol) des gemäß Beispiel 1 erhaltenen Farbstoffs beschickt und es wurde solange extrahiert, bis aller Farbstoff in den Kolben überführt war. Dann wurde das Toluol im Vakuum abgezogen, mit 50 g Methanol aufgekocht und aufgearbeitet.

Mittlere Molmasse: 330000
T_{G}: 158°C

### Beispiel 10

In einem Einhalskolben wurden 4,44 g (20 mmol) Isophorondiisocyanat (IPDI), 200 g Toluol und 0,1 g Dibutylzinndilaurat vorgelegt. Ein Soxhlet-Extraktor wurde mit 3,55 g (10 mmol) des gemäß Beispiel 1 erhaltenen Farbstoffs und 1,04 g (10 mmol) Pentandiol-1,5 beschickt und es wurde solange extrahiert, bis aller Farbstoff in den Kolben überführt war. Dann wurde das Toluol im Vakuum abgezogen, mit 50 g Methanol aufgekocht und aufgearbeitet.

Mittlere Molmasse: 95000
T_{G}: 128°C

### Beispiel 11

In einem Einhalskolben wurden 6,66 g (30 mmol) Isophorondiisocyanat (IPDI), 200 g Toluol und 0,1 g Dibutylzinndilaurat vorgelegt. Ein Soxhlet-Extraktor wurde mit 3,55 g (10 mmol) des gemäß Beispiel 1 erhaltenen Farbstoffs und 2,08 g (20 mmol) Pentandiol-1,5 beschickt und es wird solange extrahiert, bis aller Farbstoff in den Kolben überführt war. Dann wurde das Toluol im Vakuum abgezogen, mit 50 g Methanol aufgekocht und aufgearbeitet.

Mittlere Molmasse: 440000
T_{G}: 98°C
Zur Aufarbeitung wurden die Polyaddukte jeweils mehrfach aus THF/Methanol umgefällt und anschließend im Hochvakuum getrocknet.

### III. Schichtenbildung und Polung im elektrischen Feld; Bestimmung des elektrooptischen Koeffizienten

### Beispiel 12

2 g des Polyaddukts aus Beispiel 9 wurden in 30 g N-Methylpyrrolidon gelöst und durch Spincoating zu einer Schicht mit einer Dicke von 50 µm verarbeitet. Die Probe wurde anschließend zwischen zwei transparente Elektroden plaziert. Die Elektroden bestanden aus Glas, belegt mit einer elektrisch leitfähigen und transparenten Indium-Zinn-Oxid-Schicht (ITO-Schicht). Bei einer Temperatur von 100°C wurde ein elektrisches Feld von 100 V/mm an die Probe angelegt und für 15 Minuten gehalten. Anschließend ließ man abkühlen auf Raumtemperatur und entfernte dann das elektrische Polungsfeld.

Der elektrooptische Koeffizient der gepolten Polyesterprobe wurde anschließend bei einer Laserwellenlänge von 1306 nm mit r = 3 pm/V bestimmt.

(Formeln zur Bestimmung des elektrooptischen Koeffizienten können der Literatur entnommen werden - z.B. D.A. Williams, Angew. Chem. 96 (1984) 637.)

## Patentansprüche

1. Azofarbstoffgruppierungen und Urethangruppen enthaltendes Polyaddukt aus
(a) mindestens einem organischen Polyisocyanat,
(b) mindestens einem Diol eines heterocyclischen Farbstoffs,
sowie gegebenenfalls
(c) einer oder mehreren Verbindungen mit mindestens zwei gegenüber NCO reaktiven Gruppen, die ein mittleres Molekulargewicht $\overline{\text{M}}$ₙ bis zu 500 g/Mol aufweisen, und/oder
(d) einer oder mehreren Polyhydroxyverbindungen mit mittleren Molekulargewichten $\overline{\text{M}}$ₙ von über 500 bis zu 5000 g/mol,
mit der Maßgabe, daß auf ein Grammäquivalent NCO der Komponente (a) 0,1 bis 2 Grammäquivalente Hydroxylgruppen der Komponente (b), 0 bis 0,9 Grammäquivalente NCO-reaktiver Gruppen der Komponente (c), und 0 bis 0,5 Grammäquivalente Hydroxylgruppen der Komponente (d), wobei das Verhältnis der NCO-Gruppen in Komponente (a) zur Summe der NCO-reaktiven Gruppen in den Komponenten (b), (c) und (d) 2:1 bis 1:2 beträgt, eingesetzt werden und die Komponente (b) die allgemeine Formel (I) 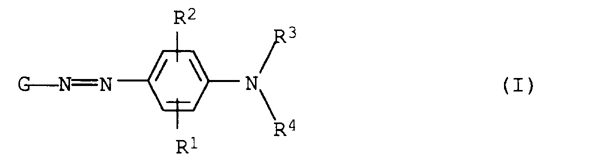 aufweist, worin
G für einen heterocyclischen Ring,
R¹ und R² untereinander gleich oder verschieden sind und für Wasserstoff, Alkyl mit 1 bis 6 Kohlenstoffatomen, Cycloalkyl mit 3 bis 7 Kohlenstoffatomen, Alkoxy mit 1 bis 6 Kohlenstoffatomen, durch Phenyl oder C₁- bis C₄-Alkoxy substituiertes Alkyl, CN, NO₂, SO₃H, CHO oder eine vernetzungsfähige Gruppierung stehen,
R³ und R⁴ untereinander gleich oder verschieden sind und für aliphatische Kohlenwasserstoffreste mit 1 bis 12 Kohlenstoffatomen, cycloaliphatische Kohlenwasserstoffreste mit 5 bis 15 Kohlenstoffatomen, aromatische Kohlenwasserstoffreste mit 6 bis 15 Kohlenstoffatomen oder araliphatische Kohlenwasserstoffreste mit 7 bis 15 Kohlenstoffatomen stehen, oder R³ und R⁴ miteinander einen stickstoffhaltigen Ring bilden, mit der Maßgabe, daß entweder R³ und R⁴ jeweils eine Hydroxylgruppe tragen oder R³ zwei Hydroxylgruppen, R⁴ jedoch keine Hydroxylgruppe trägt, oder für den Fall, daß R³ und R⁴ miteinander einen stickstoffhaltigen Ring bilden, dieser Ring zwei direkt oder über C₁-C₆-Alkylengruppen gebundene Hydroxylgruppen trägt.

2. Polyaddukt nach Anspruch 1, dadurch gekennzeichnet, daß G für einen Rest der allgemeinen Formel 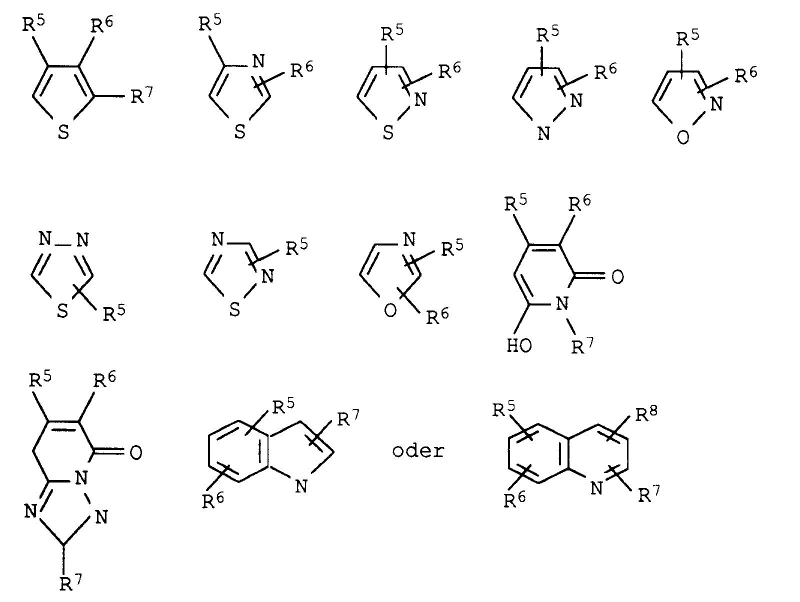 steht, worin
R⁵ bis R⁸ untereinander gleich oder verschieden sind und für Alkyl mit 1 bis 10 Kohlenstoffatomen,
Cycloalkyl mit 3 bis 8 Kohlenstoffatomen,
Alkoxy mit 1 bis 8 Kohlenstoffatomen,
Halogen, CN, NO₂, CONH₂, CONR$\frac{\text{9}}{\text{2}}$, COOR⁹, (CH₂)_{z}-COOR⁹ mit z = 1 bis 10, NH-CO-R⁹,
R⁹ = Alkyl mit 1 bis 10 Kohlenstoffatomen, Phenyl, Benzyl, Ethylphenyl oder Alkenyl mit 2 bis 10 Kohlenstoffatomen stehen oder jeweils zwei der Reste R⁵ bis R⁸ miteinander anellierte Ringe bilden, oder R⁵ bis R⁹ für vernetzungsfähige Gruppierungen stehen.

3. Polyaddukt nach einem der Ansprüche 1 oder 2, dadurch gekennzeichnet, daß in der allgemeinen Formel (I), R³ und R⁴ für -CH₂-CH₂-OH stehen.

4. Polyaddukt nach einem der Ansprüche 1 bis 3, dadurch gekennzeichnet, daß die vernetzungsfähige Gruppierung ein Cinnamoyl-, Oxiran-, CH₂=CH-CO-, CH₂=C(CH₃)-CO-, CH₂=CH-, CH₂=CH-O-CO- oder CH₂=CH-O-Rest ist.

5. Verwendung der Polyaddukte nach einem der vorhergehenden Ansprüche in der nicht-linearen Optik.

6. Verwendung der Polyaddukte nach einem der Ansprüche 1 bis 4 in Bauelementen der Nachrichtentechnik.
